**Europäisches Patentamt**

**European Patent Office**

**Office européen des brevets**

(11) Numéro de publication: **0 165 859**
**B1**

(12) **FASCICULE DE BREVET EUROPEEN**

(45) Date de publication du fascicule du brevet:
**27.01.88**

(21) Numéro de dépôt: **85401146.7**

(22) Date de dépôt: **11.06.85**

(51) Int. Cl.⁴: **E 04 H 12/10**

(54) **Dispositif de contreventement des montants d'un mât treillis et mât treillis pourvu de tels dispositifs.**

(30) Priorité: **18.06.84 FR 8409999**

(43) Date de publication de la demande:
**27.12.85 Bulletin 85/52**

(45) Mention de la délivrance du brevet:
**27.01.88 Bulletin 88/4**

(84) Etats contractants désignés:
**AT BE CH DE FR GB IT LI LU NL SE**

(56) Documents cités:
**FR - A - 1 008 302**
**FR - A - 2 268 929**
**US - A - 3 119 471**

(73) Titulaire: **LABORATOIRE D'ETUDES ET DE RECHERCHES CHIMIQUES L.E.R.C. S.A., Chemin des Hamaides, F-59230 St. Amand les Eaux (FR)**

(72) Inventeur: **Foissac, Yves, 15 rue des Lauriers, F-59300 Famars (FR)**
Inventeur: **Guislain, Guy, 103 Grand Rue, F-59158 Maulde (FR)**
Inventeur: **Ngo, Frédéric, 10 rue des Saules, F-59230 St Amand Les Eaux (FR)**
Inventeur: **Bertin, Philippe, 7/9 rue Blanche, F-59800 Lille (FR)**

(74) Mandataire: **Ecrepont, Robert, Cabinet Ecrepont 12 Place Simon Vollant (Porte de Paris), F-59800 Lille (FR)**

## Description

L'invention se rapporte à un dispositif de contreventement des montants d'un mât treillis.

Elle se rapporte également au mât treillis pourvu de tels dispositifs de contreventement.

Elle s'applique plus particulièrement mais non exclusivement aux mâts destinés à porter à une très grande distance au dessus du sol, par exemple, de trente à trente cinq mètres, des antennes émettrices et/ou réceptrices provisoires de poids considérables telles certaines antennes utilisées à des fins tant militaires que civiles.

Compte tenu de la hauteur et du poids de ces antennes, leur mât doit pouvoir supporter des contraintes importantes. Ils doivent donc réaliser des poutres très résistantes.

A cet effet, au lieu d'un mât classique formé d'un seul montant, qui pour résister devrait avoir une section et un poids excessifs, on utilise généralement des mâts réalisant des poutres en treillis et, de ce fait, communément dénommés «mâts treills».

Ces mâts treillis (US-A-3 119 471) sont composés d'au moins trois montants verticaux, généralement cylindriques, maintenus entre eux par une triangulation formée par des dispositifs de contreventement qui, par leurs extrémités, sont associés chacun à deux des montants en des points réalisant des noeuds d'assemblage.

Pour faciliter le transport, il est connu de réaliser ces mâts treillis en plusieurs tronçons.

Sur les lieux de mise en œuvre, on couche alors au sol les tronçons pour les assembler bout à bout. Ensuite, on relève verticalement l'ensemble obtenu puis on le maintient dans cette position par un haubanage.

Chacun de ces tronçons de mât est constitué de trois portions de montant reliées par les dispositifs de contreventement correspondant à cette portion de mât qui forme alors une unité indéformable.

Pour cet assemblage, sont utilisés des boulons ou rivets et plus généralement des pièces séparées qui nécessitent de l'opérateur des manipulations qui ne peuvent donc être faites pendant qu'il est occupé au relevage du mât.

Lors de l'utilisation, ces tronçons sont donc tout d'abord complètement monté puis commence le relevage pour lequel ces tronçons sont alors simplement placés bout à bout et, à chacune de leurs jonctions bout à bout, sont assemblés par tout moyen connu tel un boulonnage.

Malheureusement, outre qu'ils nécessitent pour leur levage un engin spécial, tel une grue, de tels mâts dont les tronçons sont complexes à monter et ne sont donc que rarement démontés. Aussi, chaque tronçon, demeurant sous la forme d'une poutre en treillis, présente l'inconvénient d'être encombrant à transporter.

Dans le cas d'un mât classique, comprenant donc un seul montant, si le problème de l'encombrement en longueur est comparable et résolu également par la réalisation du montant en plusieurs tronçons qui, lors de leur utilisation, sont assemblés tout à bout et si le problème d'encombrement en section se pose de manière moins aiguë, par contre, la nécessité d'une grue n'existe pas car, pour un tel mât classique, il suffit d'assembler l'antenne à l'élément de tête puis d'engager cet élément de tête dans un fût de guidage vertical qui, par un piétement, est placé à une certaine distance au dessus du sol; ensuite, pour élever l'antenne à la hauteur souhaitée, par la base du fût, on engage successivement les éléments supplémentaires ce qui progressivement remonte la tête du mât.

Malheureusement, avec les mâts treillis connus à ce jour, même scindés en plusieurs tronçons, il n'est pas possible d'utiliser ce procédé de levage, les dispositifs de contreventement et leurs moyens de liaison déjà assemblés aux montants s'opposant à leur translation dans un fût qui, de plus, compte tenu de la section du mât treillis, serait de dimensions excessives.

Dans le domaine de la construction métallique, on connaît également (FR-A-1 008 302) un assemblage de montants avec des dispositifs de contreventement au moyen de boulons ou de rivets traversant des perçages du montant et des dispositif de contreventement dans chacun desquels sont éventuellement prévus des viroles evitant la déformation des pièces lors de l'effort de serrage.

Dans une variante de réalisation, dans le montant au lieu de la virole, est soudée une tige filetée recevant les dispositifs de contreventement qui s'y fixent par des écrous séparés et présentent donc les mêmes inconvénients que le mât précité.

Un résultat que l'invention vise à obtenir est un mât treillis peu encombrant à transporter.

Un autre résultat que l'invention vise à obtenir un tel mât dont le levage est aisé.

A cet effet, le dispositif de contreventement qui est pourvu à ses extrémités de moyens démontables, est caractérisé:

— d'une part, en ce que à l'une de ses extrémités, le moyen démontable consiste en une broche cylindrique de diamètre correspondant à celui des perçages radiaux des montants dont au montage, l'un d'eux est traversé per cette broche tandis qu'à son autre extrémité, le moyen démontable consiste en un perçage d'axe parallèle à celui de la broche, de diamètre correspondant à celui de cette broche et qui, au montage, reçoit la broche du dispositif de contreventement contigu et,

— d'autre part:

. en ce que la dite broche présente une longueur suffisante pour traverser le montant puis pour s'engager au moins partiellement dans le dispositif de contreventement contigu et,

. en ce que l'extrémité libre de la broche et le perçage du dispositif de contreventement contigu sont pourvus de moyens complémentaires coopérant entre eux en vue de leur verrouillage mutuel.

Elle a également pour objet les mâts treillis pourvus de ces dispositifs.

Elle sera bien comprise à l'aide de la description ci-après faite à titre d'exemple non limitatif, en regard du dessin ci-annexé qui représente schématiquement:

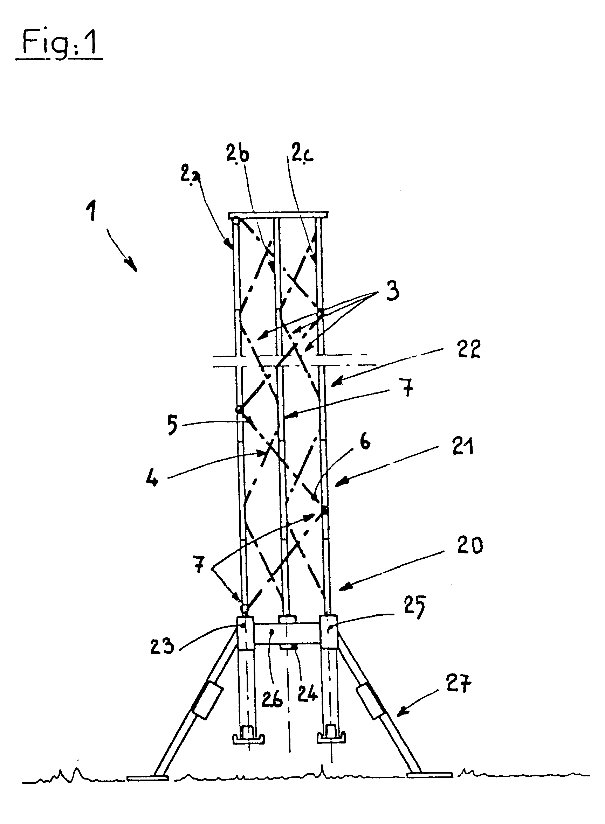

figure 1: le mât treillis vu en élévation,

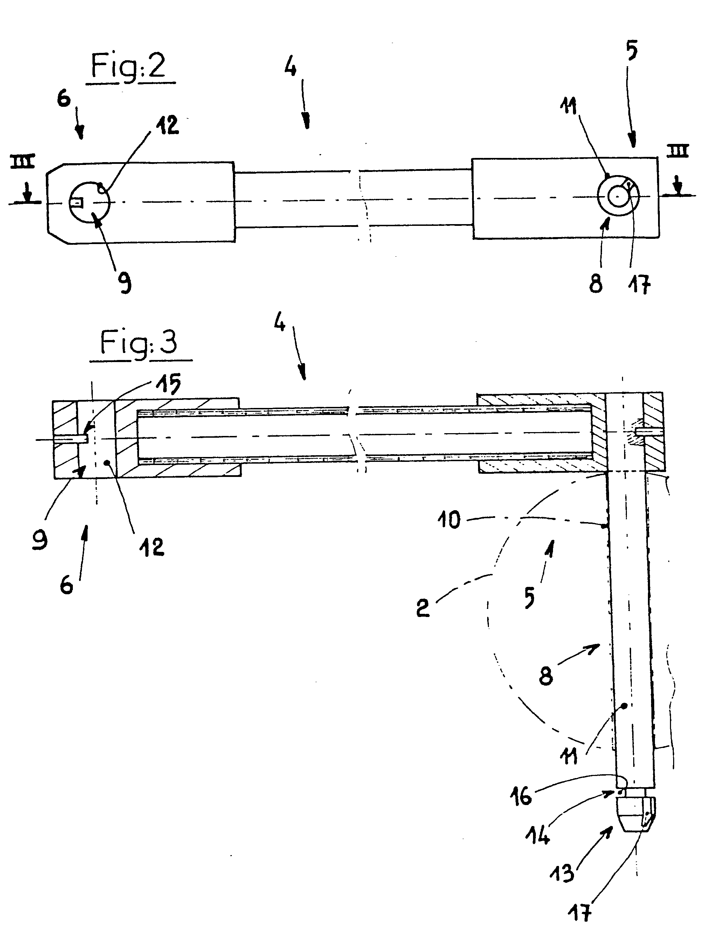

figure 2: le dispositif vu de face,
figure 3: le dispositif vu en coupe selon III-III de la figure 2.

En se reportant au dessin, on voit que le mât treillis 1 comprend au moins trois montants $2_a$, $2_b$, $2_c$ cylindriques et d'axes parallèles maintenus entre eux par une triangulation 3 formée par des dispositifs 4 de contreventement qui, par leurs extrémités 5, 6 haute et basse sont associés à deux des montants en des points 7 réalisant des noeuds d'assemblage.

De préférence, les montants sont reliés par paires par des réseaux 3 distincts de dispositifs de contreventement, disposés en zigzag, à la suite les uns des autres, dans des plans parallèles à celui contenant les deux montants.

Les dispositifs de contreventement sont pourvus à leurs extrémités 5, 6 de moyens démontables 8, 9 de liaison sur leurs montants qui, à cet effet, sont pourvus quant à eux de perçages 10 qui sont chacun radial à l'axe de leurs montants et perpendiculaires au plan des deux montants reliés par les dispositifs considérés.

Ce dispositif est caractérisé:

— d'une part, en ce que à l'une 5 de ses extrémités, le moyen 8 démontable consiste en une broche 11 cylindrique de diamètre correspondant à celui des perçages radiaux des montants dont au montage, l'un d'eux est traversé par cette broche tandis qu'à son autre extrémité 6, le moyen démontable 9 consiste en un perçage 12 d'axe parallèle à celui de la broche, de diamètre correspondant à celui de cette broche 11 et qui, au montage, reçoit la broche du dispositif de contreventement contigu et,

— d'autre part:

. en ce que la dite broche 11 présente une longueur suffisante pour traverser le montant puis pour s'engager au moins partiellement dans le dispositif de contreventement contigu et,

. en ce que l'extrémité libre 13 de la broche 11 et le perçage 12 du dispositif de contreventement contigu sont pourvus de moyens complémentaires 14, 15 coopérant entre eux en vue de leur verrouillage mutuel.

Le moyen 14 dont est pourvue l'extrémité 13 de la broche consiste en une gorge circulaire 16 communiquant avec une rainure 17 sensiblement de même largeur et de même profondeur et s'étendant de la gorge 16 à l'extrémité libre 13 de la broche tandis que le moyen complémentaire 15 dont est pourvu le perçage 12 consiste en un doigt 15 formant une saillie de dimensions correspondant à la gorge 16 et à la rainure 17.

De ce fait, la broche ne peut être engagée dans le perçage ou en être dégagée que dans une position prédéterminée par les positions relatives de la rainure et du doigt.

Il suffit alors que cette position soit différente de celle dans laquelle se place le dispositif après montage sur les montants pour assurer un auto-verrouillage.

Chaque montant peut être réalisé en plusieurs tronçons 20, 21, 22 qui, au montage, sont assemblés bout à bout.

Dans ce cas, avant pose des dispositifs de contreventement, ces montants $2_a$, $2_b$, $2_c$ peuvent alors être élevés par des fûts de guidage 23, 24, 25 de manière semblable à des mâts classiques. Les fûts 23 à 25 sont alors associés par un support 26 reposant au sol par un piétement approprié 27 pour que, par la base de chaque fût, on puisse ajouter les éléments de montants pour former un mât de hauteur correcte.

De préférence, on ajoute à chaque montant un élément à la fois puis on pose les dispositifs de contreventement avant de recommencer l'opération.

Cependant, au lieu de réunir des éléments de montants qui, dans le mât, sont situés à même hauteur, selon une caractéristique de l'invention, chaque dispositif de contreventement réunit par ses extrémités un élément de montant à un autre élément de montant qui, dans le mât, sera situé au niveau contigu.

**Revendications**

1. Dispositif (4) de contreventement d'un mât treillis qui comprend au moins trois montants ($2_a$, $2_b$, $2_c$) cylindriques et d'axes parallèles maintenus entre eux par une triangulation (3) formée par les dits dispositifs (4) de contreventement qui, par leurs extrémités (5, 6) haute et basse sont associés chacun à deux des montants en des points (7) réalisant des noeuds d'assemblage, dans lequel mât, les montants sont reliés par paires par des réseaux distincts (3) de dispositif de contreventement disposés en zigzag à la suite les uns des autres dans des plans parallèles à celui contenant les deux montants, ce dispositif de contreventement étant pourvu à ses extrémités (5, 6) de moyens démontables (8, 9) de liaison à ses montants qui, à cet effet, sont quant à eux pourvus de perçages (10) qui sont chacun radial à l'axe des montants et perpendiculaires au plan des deux montants reliés par les dispositifs considérés, ce dispositif étant caractérisé:

— d'une part, en ce que à l'une (5) de ses extrémités, le moyen (8) démontable consiste en une broche (11) cylindrique de diamètre correspondant à celui des perçages radiaux des montants dont au montage, l'un d'eux est traversé par cette broche tandis qu'à son autre extrémité (6), le moyen démontable (9) consiste en un perçage (12) d'axe parallèle à celui de la broche, de diamètre correspondant à celui de cette broche (11) et qui, au montage, reçoit la broche du dispositif de contreventement contigu et,

— d'autre part:

. en ce que la dite broche (11) présente une longueur suffisante pour traverser le montant puis pour s'engager au moins partiellement dans le dispositif de contreventement contigu et,

. en ce que l'extrémité libre (13) de la broche (11) et le perçage (12) du dispositif de contreventement contigu sont pourvus de moyens complémentaires (14, 15) coopérant entre eux en vue de leur verrouillage mutuel.

2. Dispositif selon la revendication 1 caractérisé en ce que le moyen (14) dont est pourvue l'extrémité libre (13) de la broche consiste en une gorge circulaire (16) communiquant avec une rainure (17) sensiblement de même largeur et de même profondeur et s'étendant de la gorge (16) à l'extrémité libre (13) de la broche tandis que le moyen complémentaire (15) dont est pourvu le perçage (12) consiste en un doigt (15) formant une saillie de dimensions correspondant à celles de la gorge (16) et de la rainure (17).

3. Mât treillis caractérisé en ce qu'il comprend des dispositifs de contreventement selon la revendication 1 ou 2.

**Patentansprüche**

1. Vorrichtung (4) zum Verstreben eines Gittermastes, der zumindest drei zylinderförmige Pfosten (2a, 2b, 2c) mit parallel zueinander durch eine Triangulation (3) gehaltenen Achsen aufweist, die durch die Vorrichtungen (4) zum Verstreben gebildet werden, die mit ihren oberen und unteren Enden (5, 6) jeweils mit zwei Pfosten an Punkten (7) verbunden sind, die in dem Masten Montageknoten bilden, wobei die Pfosten paarweise mit unterschiedlichen Netzen (3) von Vorrichtungen zum Verstreben verbunden sind, die zickzackförmig abwechselnd zwischen dem einen und dem anderen in zu jener parallelen Ebenen angeordnet sind, die die beiden Pfosten enthält, wobei die Vorrichtung zum Verstreben an ihren Enden (5, 6) mit demontierbaren Mitteln (8, 9) zur Verbindung mit seinem Pfosten versehen ist, die ihrerseits mit Lochungen (10) versehen sind, welche bezüglich der Achse der Pfähle radial und bezüglich der Ebene der zwei miteinander durch die betrachteten Vorrichtungen verbundenen Pfähle senkrecht verlaufen, dadurch gekennzeichnet:

— dass einerseits an einer (5) seiner Enden das demontierbare Mittel (8) aus einem zylindrischen Dorn (11) mit einem Durchmesser entsprechend jenem der radialen Lochungen der Pfähle besteht, von denen einer bei der Montage von diesem Dorn durchquert wird, währens an seinem anderen Ende (6) das demontierbare Mittel (9) aus einer Öffnung (12) mit einer zu der Achse des Dorns parallelen Achse mit einem Durchmesser entsprechend jenem des Dorns (11) besteht und der bei der Montage den Dorn der benachbarten Vorrichtung zum Verstreben aufnimmt,

— und dass andererseits

. der Dorn (11) eine ausreichende Länge zum Durchqueren des Pfahls und dem anschliessenden zumindest teilweisen Eingriff in der benachbarten Vorrichtung zum Verstreben aufweist,

. und dass das freie Ende (13) des Dorns (11) und die Öffnung (12) der benachbarten Vorrichtung zum Abverstreben mit komplementären Mitteln (14, 15) versehen sind, die miteinander mit Hinblick auf ihre gegenseitige Verriegelung zusammenwirken.

2. Vorrichtung nach Anspruch 1, dadurch gekennzeichnet, dass das Mittel (14), das für das freie Ende (13) des Dornes (11) vorgesehen ist, aus einer kreisförmigen Einschnürung (16) besteht, die mit einer Rille (17) mit im wesentlichen gleicher Grösse und gleicher Tiefe in Verbindung steht und sich von der Einschnürung (16) zu dem freien Ende (13) des Dorns erstreckt, während das komplementäre Mittel (15), das in der Öffnung (12) vorgesehen ist, aus einem Finger (15) besteht, der einen Vorsprung mit einer Grösse entsprechend jenen der Einschnürung (16) und der Rille (17) bildet.

3. Gittermast, dadurch gekennzeichnet, dass er die Vorrichtungen zum Verstreben gemäss Anspruch 1 oder 2 aufweist.

**Claims**

1. Cross-bracing device (4) for a truss-type mast comprising at least three cylindrical legs (2a, 2b, 2c) with parallel axes, held in place relative to each other by a triangular arrangement (3) constituted by said cross-bracing devices (4), the upper and lower ends (5, 6) of which are each connected to two of the legs at points (77 exhibiting fixing connections, the legs of said mast being connected in pairs by separate networks (3) of cross-bracing devices disposed one after the other in a zigzag arrangement in planes parallel to that containing the two legs, said cross-bracing device being provided at its ends (5, 6) with removable means (8, 9) of connection to its legs which are in turn provided for that purpose with drill holes (10), each of which is radial to the axis of the legs and perpendicular to the plane of the two legs connected by the devices concerned, said devices being characterised as follows:

— on the one hand, in that at one (5) of its ends the removable means (8) consists of a cylindrical pin (11) with a diameter corresponding to that of the radial drill holes in the legs, said pin being passed through one of said legs on assembly, while at its other end (6) the removable means (9) consists of a drill hole (12) with parallel axis to that of the pin, and with a diameter corresponding to that of said pin (11), which on assembly receives the pin of the adjoining cross-bracing device, and,

— on the other hand:

. in that the length of said pin (11) is sufficient for it to pass through the leg and then at least partially engage in the adjoining cross-bracing device and

. in that the free end (13) of the pin (11) and the drill hole (12) of the adjoining cross-bracing device are provided with supplementary means (14, 15) which co-operate so as to interlock with each other.

2. The device according to Claim 1, characterised in that the means (14) whose free end (13) is provided with the pin comprises an annular recess (16) communicating with a slot (17) of approximately the same width and depth and extending from the recess (16) to the free end (13) of the pin, while the supplementary means (15) with which the drill hole (12) is provided comprises a finger (15) forming a projection whose dimensions correspond to those of the recess (16) and the slot (17).

3. A truss-type mast, characterised by including cross-bracing devices according to Claim 1 or 2.

## Fig:1

Fig.2

Fig.3